# EUROPEAN PATENT APPLICATION

(11) **EP 4 575 710 A1**
(43) Date of publication of application: **25.06.2025**
(21) Application number: 23868435.1
(22) Date of filing: 01.09.2023
(51) Int. Cl.: G06F 1/16, G06F 3/14, G06F 3/041

(54) **ELECTRONIC DEVICE AND METHOD FOR CONTROLLING SCREEN DISPLAYED ON FLEXIBLE DISPLAY**

(30) Priority: 23.09.2022 KR 20220121220; 12.10.2022 KR 20220130906
(71) Applicant: Samsung Electronics Co., Ltd., Suwon-si, Gyeonggi-do 16677 (KR)
(72) Inventor: LEE, Heunjin, Suwon-si,Gyeonggi-do 16677 (KR)
(74) Representative: Appleyard Lees IP LLP
(86) International application number: PCT/KR2023/013078
(87) International publication number: WO 2024/063380

(57) **Abstract**

According to one embodiment, an electronic device comprises: a first housing; a second housing; a flexible display including a first display area and a second display area extending from the first display area; and a processor connected to the flexible display through each of a first electrical path and a second electrical path, wherein the processor is configured to: display, within the first display area, a first screen provided through the first electrical path on the basis of the flexible display being in a first state; display, within the first display area, the first screen provided through the first electrical path on the basis of the flexible display being in a second state; and display, within the second display area, a second screen provided through the second electrical path.

## Description

### [Technical Field]

The following descriptions relate to an electronic device and a method for controlling a screen displayed on a flexible display.

### [Background Art]

According to development of technology, an electronic device including a flexible display is being developed. For example, at least a portion of the flexible display included in the electronic device may be inserted into the housing or extracted from the housing of the electronic device to change a size of a display area of the flexible display.

### [Disclosure]

### [Technical Solution]

According to an embodiment, an electronic device may comprise a first housing, a second housing slidably coupled to the first housing, a flexible display, comprising a first display area and a second display area extended from the first display area, providing a first state in which the second display area is rolled into the first housing by the second housing sliding relative to the first housing and a second state in which the second display area is exposed outside the first housing by the second housing sliding relative to the first housing, and a processor connected to the flexible display through each of a first electrical path and a second electrical path, and the processor may be configured to display, based on the flexible display in the first state, a first screen provided through the first electrical path within the first display area, and display, based on the flexible display in the second state, the first screen provided through the first electrical path within the first display area and a second screen provided through the second electrical path within the second display area.

According to an embodiment, a method of an electronic device may comprise identifying a state of a flexible display comprising a first display area and a second display area extended from the first display area, as one of a first state in which the second display area is rolled into a first housing of the electronic device by a second housing of the electronic device, sliding relative to the first housing and a second state in which the second display area is exposed outside the first housing by the second housing sliding relative to the first housing, displaying, based on the flexible display in the first state, a first screen provided through a first electrical path within the first display area, and displaying, based on the flexible display in the second state, the first screen provided through the first electrical path within the first display area and a second screen provided through a second electrical path within the second display area.

### [Description of the Drawings]

FIG. 1 is a block diagram of an electronic device in a network environment according to an embodiment.
FIG. 2A illustrates an example of a shape of an electronic device including a flexible display.
FIG. 2B illustrates an example of a shape of an electronic device including a flexible display.
FIG. 2C illustrates an example of a shape of an electronic device including a flexible display.
FIG. 3 is a simplified block diagram of an electronic device according to an embodiment.
FIG. 4A illustrates an example of a plurality of electrical paths between a processor and a flexible display according to an embodiment.
FIG. 4B illustrates an example of a plurality of electrical paths between a processor and a flexible display according to an embodiment.
FIG. 4C illustrates an example of a plurality of electrical paths between a processor and a flexible display according to an embodiment.
FIG. 5 illustrates a flowchart of an operation of an electronic device according to an embodiment.
FIG. 6 illustrates a flowchart of an operation of an electronic device according to an embodiment.
FIG. 7 illustrates a flowchart of an operation of an electronic device according to an embodiment.
FIG. 8 illustrates a flowchart of an operation of an electronic device according to an embodiment.
FIG. 9 illustrates an example of an operation of an electronic device according to an embodiment.

### [Mode for Invention]

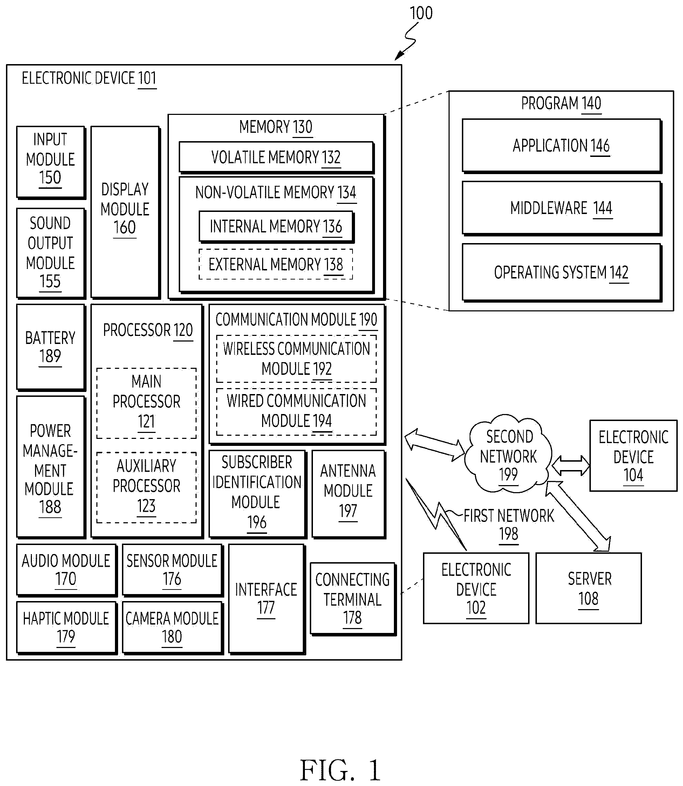

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, an electronic device (e.g., the electronic device 101 of FIG. 1) may include a flexible display. By being inserted into a housing of the electronic device, the flexible display may provide a first state in which at least a portion of the flexible display is rolled into the housing, and a second state in which at least a portion of the flexible display is exposed outside the housing of the electronic device. The flexible display may provide a first display area in the first state. The flexible display may provide the first display area, and a second display area extended from the first display area in the second state. A processor (e.g., a graphics processing unit (GPU)) of the electronic device may display a screen in each of the first display area and the second display area, using different electrical paths. In the following specification, an electronic device and a method for displaying a screen in each of the display areas divided in the flexible display using different electrical paths are described.

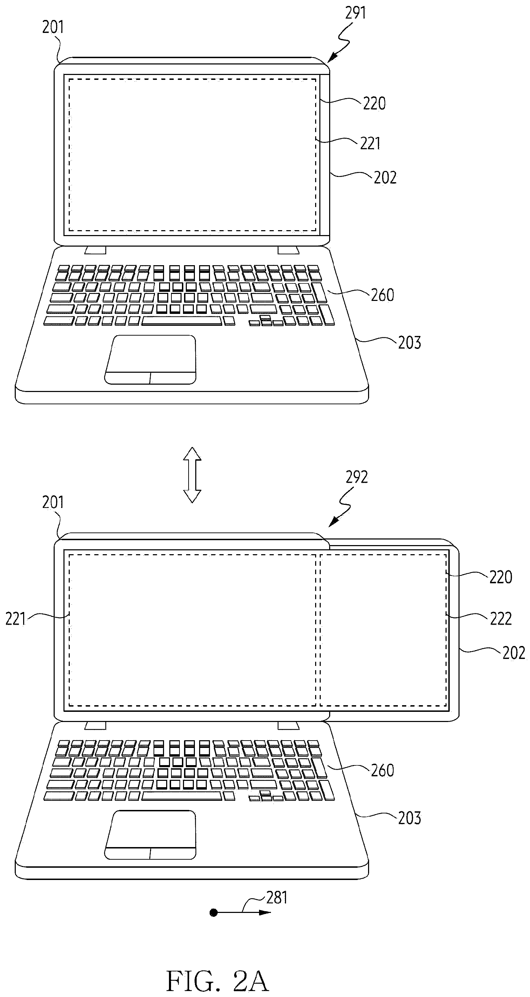

FIG. 2A illustrates an example of a shape of an electronic device including a flexible display.

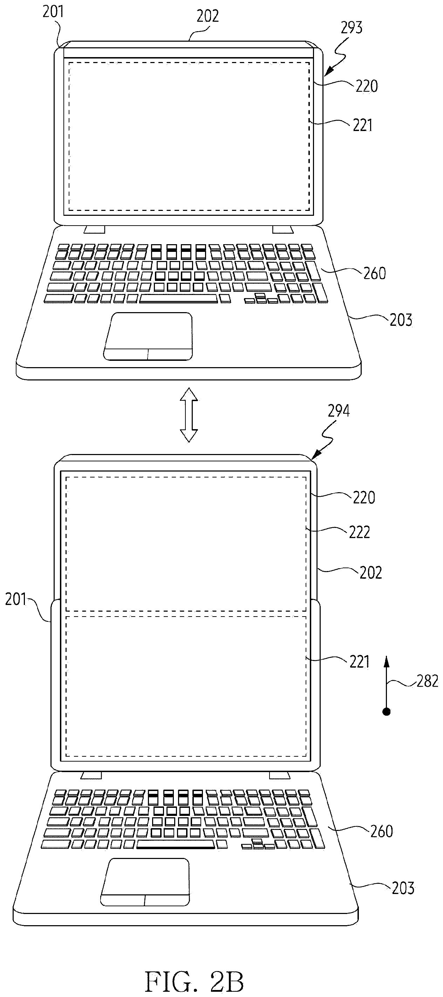

FIG. 2B illustrates an example of a shape of an electronic device including a flexible display.

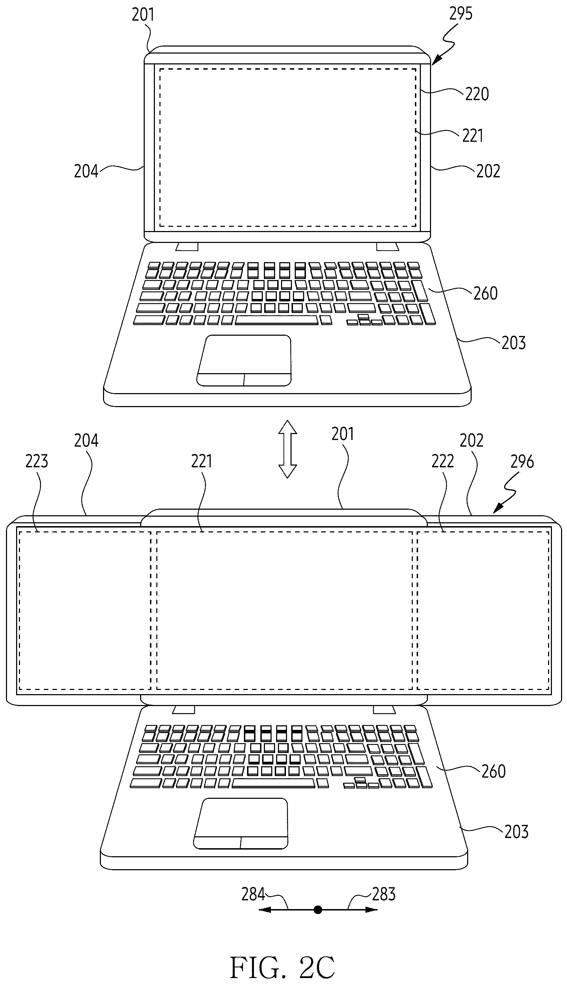

FIG. 2C illustrates an example of a shape of an electronic device including a flexible display.

Referring to FIG. 2A, an electronic device 200 may include a first housing 201, a second housing 202, and a third housing 203. The second housing 202 may be slidably coupled to the first housing 201 in a direction 281. The third housing 203 may be rotatably coupled to the first housing 201.

According to an embodiment, the electronic device 200 may include a flexible display 220. The flexible display 220 may be disposed in at least a portion of the first housing 201 and the second housing 202. For example, the flexible display 220 may be disposed on a surface formed by the first housing 201 and the second housing 202. The flexible display 220 may include a first display area 221 and a second display area 222 extended from the first display area 221.

In the state 291, the second display area 222 of the flexible display 220 may be rolled into the first housing 201 by the second housing 202 sliding relative to the first housing 201. In the state 291, the first display area 221 of the flexible display 220 may be exposed outside the first housing 201.

In a state 292, the second display area 222 of the flexible display 220 may be exposed outside the first housing 201 by the second housing 202 sliding relative to the first housing 201. In the state 292, the first display area 221 and the second display area 222 of the flexible display 220 may be exposed outside the first housing 201. For example, a state of the illustrated flexible display 220 may be changed from the state 291 to the state 292, based on the second housing 202 sliding in the direction 281 relative to the first housing 201.

In FIG. 2A, an example in which the second housing 202 slides in the direction 281 relative to the first housing 201 is illustrated, but is not limited thereto. The second housing 202 may also slide in a direction opposite to the direction 281 relative to the first housing 201.

Referring to FIG. 2B, the electronic device 200 illustrated in FIG. 2B may include the first housing 201, the second housing 202, and the third housing 203. The second housing 202 may be slidably coupled to the first housing 201 in a direction 282. The third housing 203 may be rotatably coupled to the first housing 201.

According to an embodiment, the electronic device 200 may include the flexible display 220. Unlike the flexible display 220 illustrated in FIG. 2A, the flexible display 220 illustrated in FIG. 2B may be composed to be extended in the direction 282.

In a state 293, the second display area 222 of the flexible display 220 may be rolled into the first housing 201 by the second housing 202 sliding relative to the first housing 201. In the state 293, the first display area 221 of the flexible display 220 may be exposed outside the first housing 201.

In a state 294, the second display area 222 of the flexible display 220 may be exposed outside the first housing 201 by the second housing 202 sliding relative to the first housing 201. In the state 294, the first display area 221 and the second display area 222 of the flexible display 220 may be exposed outside the first housing 201. For example, a state of the illustrated flexible display 220 may be changed from the state 293 to the state 294, based on the second housing 202 sliding in the direction 282 relative to the first housing 201.

Referring to FIG. 2C, the electronic device 200 may include the first housing 201, the second housing 202, the third housing 203, and a fourth housing 204. The second housing 202 may be slidably coupled to the first housing 201 in a direction 283. The fourth housing 204 may be slidably coupled to the first housing 201 in a direction 284. The third housing 203 may be rotatably coupled to the first housing 201.

According to an embodiment, the electronic device 200 may include the flexible display 220. The flexible display 220 may be disposed in at least a portion of the first housing 201, the second housing 202, and the third housing 203. For example, the flexible display 220 may be disposed on a surface formed by the first housing 201, the second housing 202, and the third housing 203. The flexible display 220 may include the first display area 221, the second display area 222 extended from the first display area 221, and a third display area 223 extended from the first display area 221.

In a state 295, the second display area 222 of the flexible display 220 may be rolled into the first housing 201 by the second housing 202 sliding relative to the first housing 201. The third display area 223 of the flexible display 220 may be rolled into the first housing 201 by the fourth housing 204 sliding relative to the first housing 201. In the state 295, the first display area 221 of the flexible display 220 may be exposed outside the first housing 201.

In a state 296, the second display area 222 of the flexible display 220 may be exposed outside the first housing 201 by the second housing 202 sliding relative to the first housing 201. The third display area 223 of the flexible display 220 may be exposed outside the first housing 201 by the fourth housing 204 sliding relative to the first housing 201. In the state 296, the first display area 221, the second display area 222, and the third display area 223 of the flexible display 220 may be exposed outside the first housing 201. For example, a state of the illustrated flexible display 220 may be changed from the state 295 to the state 296, based on the second housing 202 sliding in the direction 283 relative to the first housing 201, and the fourth housing 204 sliding in the direction 284 relative to the first housing 201.

Although not illustrated, the flexible display 220 may also provide a state in which only the second display area 222 of the second display area 222 and the third display area 223 is exposed outside the first housing 201, and/or a state in which only the third display area 223 of the second display area 222 and the third display area 223 is exposed outside the first housing 201. For example, in the state that only the second display area 222 of the second display area 222 and the third display area 223 is exposed outside the first housing 201, the flexible display 220 may provide at least one screen, by using the first display area 221 and the second display area 222. For example, in the state that only the third display area 223 of the second display area 222 and the third display area 223 is exposed outside the first housing 201, the flexible display 220 may provide at least one screen, by using the first display area 221 and the third display area 223.

Referring to FIGS. 2A to 2C, the electronic device 200 may include an input device 260. The input device 260 may be composed of at least one input device. For example, the input device 260 may include at least one of a keyboard, a touch pad, a power button, fingerprint recognition circuitry, and a click button. The input device 260 may be included in the third housing 203. For example, the input device 260 may be disposed in at least a portion of the third housing 203.

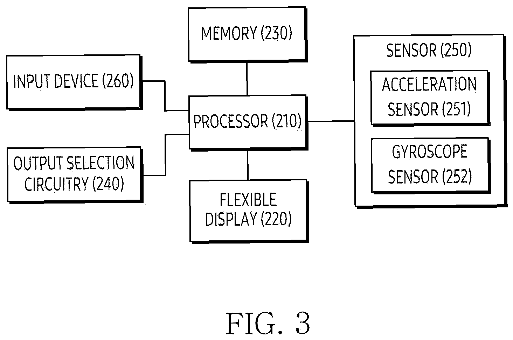

FIG. 3 is a simplified block diagram of an electronic device according to an embodiment.

Referring to FIG. 3, an electronic device 200 may include a portion or all of components of the electronic device 101 illustrated in FIG. 1. For example, the electronic device 200 may correspond to the electronic device 101 illustrated in FIG. 1.

According to an embodiment, the electronic device 200 may include a processor 210, a flexible display 220, memory 230, output selection circuitry 240, a sensor 250, and/or an input device 260. According to an embodiment, the electronic device 200 may include at least one of the processor 210, the flexible display 220, the memory 230, the output selection circuitry 240, the sensor 250, and the input device 260. For example, at least a portion of the processor 210, the flexible display 220, the memory 230, the output selection circuitry 240, the sensor 250, and the input device 260 may be omitted according to an embodiment.

According to an embodiment, the processor 210 may be operatively (or operably) coupled with or connected with the flexible display 220, the memory 230, the output selection circuitry 240, the sensor 250, and the input device 260. The processor 210 being operatively coupled with or connected with the flexible display 220, the memory 230, the output selection circuitry 240, the sensor 250, and the input device 260 may mean that the processor 210 may control the flexible display 220, the memory 230, the output selection circuitry 240, the sensor 250, and the input device 260. For example, the flexible display 220, the memory 230, the output selection circuitry 240, the sensor 250, and the input device 260 may be controlled by the processor 210. For example, the processor 210 may be composed of at least one processor. The processor 210 may include at least one processor. For example, the processor 210 may correspond to the processor 120 of FIG. 1.

According to an embodiment, the processor 210 may include a hardware component for processing data based on one or more instructions. For example, the hardware component for processing the data may include an arithmetic and logic unit (ALU), a field programmable gate array (FPGA), a central processing unit (CPU), and/or a graphics processing unit (GPU).

For example, the processor 210 may compose at least one screen displayed through the flexible display 220 or an external device. For example, the processor 210 may provide a first screen through a first electrical path. The processor 210 may provide a second screen through a second electrical path. The processor 210 may provide a third screen through a third electrical path. As an example, the processor 210 may display the first screen through the first electrical path within a first display area 221 of the flexible display 220. The processor 210 may display the second screen through the second electrical path within a second display area 222 of the flexible display 220. The processor 210 may provide the external device with the third screen to be displayed within a display area of the external device through the third electrical path.

According to an embodiment, the electronic device 200 may include the flexible display 220. For example, the flexible display 220 may be composed such that at least a portion of the flexible display 220 is insertable into a housing (e.g., the first housing 201 of FIGS. 2A to 2C) of the electronic device 200 or is extractable from the housing of the electronic device 200. For example, a display 420 may correspond to the display module 160 of FIG. 1.

According to an embodiment, the flexible display 220 may be deformable. The flexible display 220 may provide different display areas according to a state of the flexible display 220. For example, in case that the state of the flexible display 220 is a first state, the flexible display 220 may provide the first display area 221. In case that the state of the flexible display 220 is a second state, the flexible display 220 may provide the first display area 221 and the second display area extended from the first display area 221.

For example, based on the state of the flexible display 220 in the first state, a display area in which the flexible display 220 is exposed to a minimum size may be provided. Based on the state of the flexible display 220 in the second state, a display area in which the flexible display 220 is exposed to a maximum size may be provided.

As an example, in the first state, the display area of the flexible display 220 may be configured to be the smallest. As an example, the first state may be a state that provides a visible area having a minimum size. As an example, the first state may be a state that provides the first display area 221, which is a display area in which the flexible display 220 is exposed to the minimum size. The first state may be referred to as a slide-in state.

As another example, in the second state, the display area of the flexible display 220 may be configured to be the largest. As an example, the second state may be a state that provides a visible area having a maximum size. As an example, the second state may be a state that provides the first display area 221, and the second display area 222, which is a display area in which the flexible display 220 is exposed to the maximum size. The second state may be referred to as a slide-out state.

According to an embodiment, the flexible display 220 may be configured to a third state, which is an intermediate state between the first state and the second state. Based on the state of the flexible display 220 in the third state, the flexible display 220 may provide a display area larger than a size of the first display area 221 and smaller than a size of the first display area 221 and the second display area 222.

According to an embodiment, the electronic device 200 may include the memory 230. The memory 230 may be used to store information or data. For example, the memory 230 may be used to store data on a user. For example, the memory 230 may correspond to the memory 130 of FIG. 1. For example, the memory 230 may be a volatile memory unit or units. For example, the memory 230 may be a non-volatile memory unit or units. For example, the memory 230 may be another type of computer-readable medium, such as a magnetic or optical disk.

According to an embodiment, the processor 210 may store information on a use history of the electronic device 200 in the memory 230. For example, the processor 210 may store information representing that the user configures the state of the flexible display 220 to the second state in a state in which power is connected to the electronic device 200. For example, the processor 210 may store information representing that the user configures the state of the flexible display 220 to the second state in a state in which an external electronic device is connected to the electronic device 200. For example, the processor 210 may store the information representing that the user configures the state of the flexible display 220 to the second state when using the electronic device 200. For example, in case that a first application is executed in the electronic device 200, the processor 210 may store the information representing that the state of the flexible display 220 is configured to the second state.

According to an embodiment, the electronic device 200 may include the output selection circuitry 240. For example, the output selection circuitry 240 may be composed of at least one output selection circuitry. For example, the output selection circuitry 240 may be used to change a path through which a signal transmitted from the processor 210 is transmitted. The processor 210 may activate or deactivate at least a portion of a plurality of electrical paths, by using the output selection circuitry 240. As an example, the processor 210 may activate at least one of the first electrical path and the second electrical path, by using the output selection circuitry 240.

According to an embodiment, the electronic device 200 may include the sensor 250. The sensor 250 may be used to obtain various information. The sensor 250 may be used to obtain information on the electronic device 200. For example, the sensor 250 may correspond to the sensor module 176 of FIG. 1.

According to an embodiment, the sensor 250 may be composed of at least one sensor. For example, the sensor 250 may include at least one of an acceleration sensor 251 and a gyroscope sensor 252. For example, the acceleration sensor 251 may identify (or measure or detect) acceleration of the electronic device 200 in three directions of an x-axis, a y-axis, and a z-axis. For example, the gyroscope sensor 252 may identify (or measure or detect) angular velocity of the electronic device 200 in three directions of the x-axis, the y-axis, and the z-axis. According to an embodiment, the electronic device 200 may include a motion sensor composed of the acceleration sensor 251 and the gyroscope sensor 252.

According to an embodiment, the electronic device 200 may include the input device 260. The input device 260 may be composed of at least one input device. For example, the input device 260 may include at least one of a keyboard, a touch pad, a power button, fingerprint recognition circuitry, a speaker, a microphone, and a click button. For example, the input device 260 may further include at least one component. The at least one component may be included in the electronic device 200 and used to perform various functions. For example, the at least one component may include a port for a USB connection or charging a battery of the electronic device 200, and/or a port for an audio connection.

Although not illustrated, the electronic device 200 may further include various compositions in addition to compositions illustrated in FIG. 3. For example, the electronic device 200 may further include a rechargeable battery and/or communication circuitry for performing wired communication and/or wireless communication with the external device.

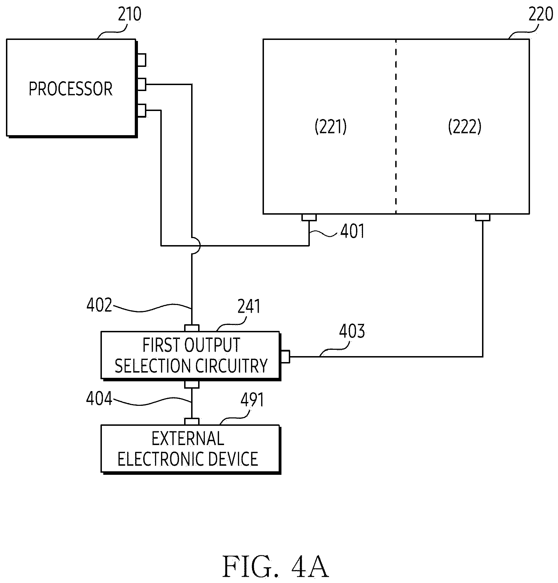

FIG. 4A illustrates an example of a plurality of electrical paths between a processor and a flexible display according to an embodiment.

Referring to FIG. 4A, an electronic device 200 illustrated in FIG. 4A may correspond to the electronic device 200 illustrated in FIG. 2A.

According to an embodiment, a processor 210 may be connected to a flexible display 220 through each of a first electrical path and a second electrical path. The first electrical path may be composed of a path 401. The second electrical path may be composed of a path 402 and a path 403. The processor 210 may be connected to an external electronic device 491 through a third electrical path. The third electrical path may be composed of the path 402 and a path 404. For example, the external electronic device 491 may include a display. The external electronic device 491 may be used to provide an additional display. For example, the external electronic device 491 may be a device including the display (e.g., a monitor or a TV).

According to an embodiment, the flexible display 220 may operate as one of a first state and a second state. For example, in the first state, a second display area 222 of the flexible display 220 may be rolled into a first housing 201 by a second housing 202 sliding relative to the first housing 201. For example, in the second state, the second display area 222 of the flexible display 220 may be exposed outside the first housing 201 by the second housing 202 sliding relative to the first housing 201.

According to an embodiment, the first electrical path may be used for a first display area 221. The processor 210 may display a first screen provided through the first electrical path within the first display area 221. For example, while a state of the flexible display 220 is in the first state, the processor 210 may display the first screen provided through the first electrical path within the first display area 221. For example, while the state of the flexible display 220 is in the first state, the processor 210 may activate the first electrical path, and deactivate the second electrical path.

According to an embodiment, the second electrical path may be used for the second display area 222. The processor 210 may display a second screen provided through the second electrical path within the second display area 222. For example, while a state of the flexible display 220 is in the second state, the processor 210 may display the first screen provided through the first electrical path within the first display area 221, and the second screen provided through the second electrical path within the second display area 222. For example, while the state of the flexible display 220 is in the second state, the processor 210 may activate the first electrical path and the second electrical path.

According to an embodiment, the processor 210 may activate at least one of the second electronic path and a third electronic path, by using first output selection circuitry 241.

For example, the processor 210 may display, based on activating the second electrical path using the first output selection circuitry 241, the second screen within the second display area 222.

For example, the processor 210 may provide, based on activating the third electrical path using the first output selection circuitry 241, a third screen to the external electronic device 491 through the third electrical path. The processor 210 may display the third screen through the external electronic device 491, by providing the third screen to the external electronic device 491 through the third electrical path.

For example, the processor 210 may display, based on activating both the second electrical path and the third electrical path, using the first output selection circuitry 241, the second screen within the second display area 222, and the third screen through the external electronic device 491.

According to an embodiment, the first electrical path may also be used for the first display area 221 and the second display area 222. The processor 210 may also display a fourth screen provided through the first electrical path within the first display area 221 and the second display area 222. For example, the processor 210 may change a screen provided through the first electrical path from the first screen for the first display area 221 to the fourth screen for the first display area 221 and the second display area 222. Sizes and/or resolutions of the first screen and the fourth screen may be different. Therefore, the processor 210 should change a signal transmitted through the first electrical path to provide the fourth screen whose size and/or resolution are different from the first screen. In case that the signal transmitted through the first electrical path is changed, the screen may temporarily blink.

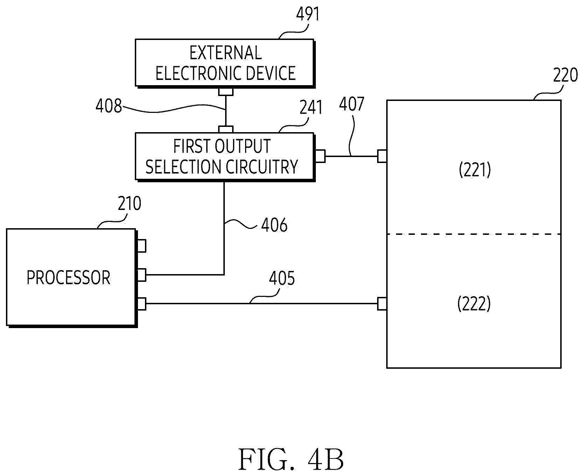

FIG. 4B illustrates an example of a plurality of electrical paths between a processor and a flexible display according to an embodiment.

Referring to FIG. 4B, the electronic device 200 illustrated in FIG. 4B may correspond to the electronic device 200 illustrated in FIG. 2B.

According to an embodiment, similar to FIG. 4A, the processor 210 may be connected to the flexible display 220 through each of a first electrical path and a second electrical path. The first electrical path may be composed of a path 405. The second electrical path may be composed of a path 406 and a path 407. The processor 210 may be connected to the external electronic device 491 through a third electrical path. The third electrical path may be composed of the path 406 and a path 408.

The electronic device 200 illustrated in FIG. 4B may be composed of only a position of the first display area 221 and the second display area 222 being different from the electronic device 200 of FIG. 4A. For example, in the electronic device 200 illustrated in FIG. 4A, the second display area 222 may be extended from the first display area 221 in a right direction (e.g., a left direction according to an embodiment). For example, in the electronic device 200 illustrated in FIG. 4B, the second display area 222 may be extended from the first display area 221 in an upper direction (e.g., a lower direction according to an embodiment).

Therefore, the processor 210 of the electronic device 200 illustrated in FIG. 4B may perform an operation substantially the same as or similar to an operation of the processor 210 of the electronic device 200 illustrated in FIG. 4A.

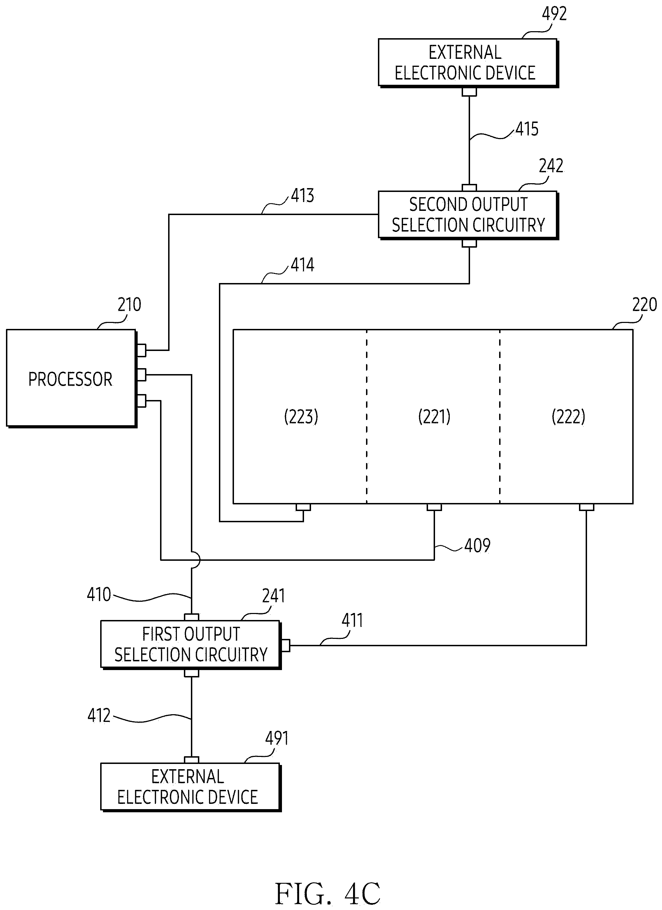

FIG. 4C illustrates an example of a plurality of electrical paths between a processor and a flexible display according to an embodiment.

Referring to FIG. 4C, the electronic device 200 illustrated in FIG. 4C may correspond to the electronic device 200 illustrated in FIG. 2C.

According to an embodiment, the processor 210 may be connected to the flexible display 220 through each of a first electrical path and a second electrical path, and a fourth electrical path. The first electrical path may be composed of a path 409. The second electrical path may be composed of a path 410 and a path 411. The fourth electrical path may be composed of a path 413 and a path 414. The processor 210 may be connected to the external electronic device 491 through a third electrical path. The third electrical path may be composed of the path 410 and a path 412. The processor 210 may be connected to an external electronic device 492 through a fifth electrical path. The fifth electrical path may be composed of the path 413 and a path 415.

According to an embodiment, the flexible display 220 may operate as one of a plurality of states. For example, in a first state, the second display area 222, and a third display area 223 of the flexible display 220 may be rolled into the first housing 201 by the second housing 202 and a third housing 203 sliding relative to the first housing 201. For example, in a second state, the second display area 222 of the flexible display 220 may be exposed outside the first housing 201 by the second housing 202 and the third housing 203 sliding relative to the first housing 201. For example, in a third state, only the second display area 222 of the second display area 222 and the third display area 223 of the flexible display 220 may be exposed outside the first housing 201. For example, in a fourth state, only the third display area 223 of the second display area 222 and the third display area 223 of the flexible display 220 may be exposed outside the first housing 201.

According to an embodiment, the first electrical path may be used for the first display area 221. The processor 210 may display a first screen provided through the first electrical path within the first display area 221. For example, while a state of the flexible display 220 is in the first state, the processor 210 may display the first screen provided through the first electrical path within the first display area 221. For example, while the state of the flexible display 220 is in the first state, the processor 210 may activate the first electrical path, and deactivate the second electrical path.

According to an embodiment, the second electrical path may be used for the second display area 222. The processor 210 may display a second screen provided through the second electrical path within the second display area 222. The fourth electrical path may be used for the third display area 223. The processor 210 may display a fourth screen provided through the fourth electrical path within the third display area 223.

For example, while a state of the flexible display 220 is in the second state, the processor 210 may display the first screen provided through the first electrical path within the first display area 221, the second screen provided through the second electrical path within the second display area 222, and the fourth screen provided through the fourth electrical path within the third display area 223. For example, while the state of the flexible display 220 is in the second state, the processor 210 may activate the first electrical path, the second electrical path, and the fourth electrical path.

According to an embodiment, the processor 210 may activate at least one of the second electronic path and the third electronic path, by using the first output selection circuitry 241.

For example, the processor 210 may display, based on activating the second electrical path using the first output selection circuitry 241, the second screen within the second display area 222.

For example, the processor 210 may provide, based on activating the third electrical path using the first output selection circuitry 241, a third screen to the external electronic device 491 through the third electrical path. The processor 210 may display the third screen through the external electronic device 491, by providing the third screen to the external electronic device 491 through the third electrical path.

For example, the processor 210 may display, based on activating both the second electrical path and the third electrical path using the first output selection circuitry 241, the second screen within the second display area 222, and the third screen through the external electronic device 491.

According to an embodiment, the processor 210 may activate at least one of the fourth electronic path and the fifth electronic path, by using second output selection circuitry 242.

For example, the processor 210 may display, based on activating the fourth electrical path using the second output selection circuitry 242, the fourth screen within the third display area 223.

For example, the processor 210 may provide, based on activating the fifth electrical path using the second output selection circuitry 242, a fifth screen to the external electronic device 492 through the fifth electrical path. The processor 210 may display the fifth screen through the external electronic device 492, by providing the fifth screen to the external electronic device 492 through the fifth electrical path.

For example, based on activating both the fourth electrical path and fifth electrical path using the second output selection circuitry 242, the processor 210 may display the fourth screen within the third display area 223, and the fifth screen through the external electronic device 492.

According to an embodiment, the first electrical path may be used for the first display area 221 and the second display area 222. For example, the processor 210 may display a sixth screen provided through the first electrical path within the first display area 221 and the second display area 222. While the sixth screen is displayed in the first display area 221 and the second display area 222, the processor 210 may display the fourth screen provided through the fourth electrical path within the third display area 223.

According to an embodiment, the first electrical path may be used for the first display area 221 and the third display area 223. For example, the processor 210 may display a seventh screen provided through the first electrical path within the first display area 221 and the third display area 223. While the seventh screen is displayed in the first display area 221 and the third display area 223, the processor 210 may display the second screen provided through the second electrical path within the second display area 222.

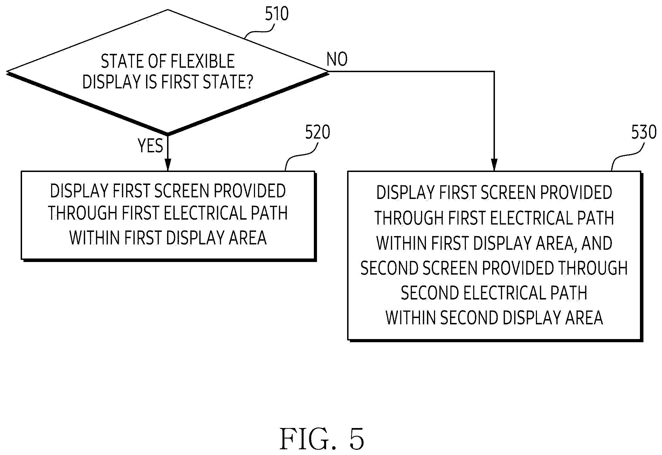

Various embodiments of FIGS. 5 to 9 below may be described based on the electronic device 200 illustrated in FIGS. 4A or 4B. This is for convenience of a description, and the various embodiments according to FIGS. 5 to 9 may also be performed in the electronic device 200 illustrated in FIG. 4C.

FIG. 5 illustrates a flowchart of an operation of an electronic device according to an embodiment.

Referring to FIG. 5, in operation 510, a processor 210 may identify whether a state of a flexible display 220 is a first state. For example, the processor 210 may identify whether the state of the flexible display 220 is the first state of the first state and a second state. For example, the flexible display 220 may operate as one of the first state and the second state. The first state may mean a state in which a second display area 222 is rolled into a first housing 201 by a second housing 202 sliding relative to the first housing 201. The second state may mean a state in which the second display area 222 is exposed outside the first housing 201 by the second housing 202 sliding relative to the first housing 201.

In operation 520, in case that the state of the flexible display 220 is the first state, the processor 210 display a first screen provided through a first electrical path within a first display area 221. Based on identifying that the state of the flexible display 220 is in the first state, the processor 210 display the first screen provided through the first electrical path within the first display area 221.

According to an embodiment, the processor 210 may deactivate, based on identifying that the state of the flexible display 220 is the first state, a second electrical path. For example, the processor 210 may identify that the state of the flexible display 220 is changed from the second state to the first state. The processor 210 may deactivate, based on identifying that the state of the flexible display 220 is changed from the second state to the first state, the second electrical path. The processor 210 may maintain, based on identifying that the state of the flexible display 220 is changed from the second state to the first state, the activated first electrical path.

For example, the processor 210 may activate at least one of the second electronic path for connecting the processor 210 and the flexible display 220, and a third electronic path for connecting the processor 210 and an external electronic device 491, using first output selection circuitry 241. The processor 210 may deactivate the second electrical path, using the first output selection circuitry 241.

In operation 530, in case that the state of the flexible display 220 is in the second state, the processor 210 may display the first screen provided through the first electrical path within the first display area 221, and a second screen provided through the second electrical path within the second display area 222. For example, the processor 210 may, based on identifying that the state of the flexible display 220 is in the second state, display the first screen provided through the first electrical path within the first display area 221, and the second screen provided through the second electrical path within the second display area 222.

According to an embodiment, the processor 210 may, based on identifying that the state of the flexible display 210 is in the second state, activate the second electrical path. For example, the processor 210 may identify that the state of the flexible display 220 is changed from the first state to the second state. The processor 210 may, based on identifying that the state of the flexible display 220 is changed from the first state to the second state, activate the second electrical path. The processor 210 may, based on identifying that the state of the flexible display 220 is changed from the first state to the second state, maintain the activated first electrical path. For example, the processor 210 may activate the second electrical path, using the first output selection circuitry 241.

According to an embodiment, in the state of the flexible display 220 being in the second state, the processor 210 may display the first screen provided through the first electrical path within the first display area 221, and the second screen provided through the second electrical path within the second display area 222. The processor 210 may, based on identifying that the state of the flexible display 220 is changed from the second state to the first state, cease to display the second screen within the second display area 222, by deactivating the second electrical path. Even in case that the state of the flexible display 220 is changed from the second state to the first state, the processor 210 may not change resolution of a screen (e.g., the first screen) provided through the first electrical path. Therefore, even in case that the state of the flexible display 220 is changed from the second state to the first state, the processor 210 may display the first screen in the first display area 221 without a delay.

According to an embodiment, in the state of the flexible display 220 being in the first state, the processor 210 may display the first screen provided through the first electrical path within the first display area 221. The processor 210 may, based on identifying that the state of the flexible display 220 is changed from the first state to the second state, display the second screen within the second display area 222, by deactivating the second electrical path. Since the display of the first screen is maintained, even in case that the state of the flexible display 220 is changed from the first state to the second state, the processor 210 may not change resolution of the screen (e.g., the first screen) provided through the first electrical path. Therefore, even in case that the state of the flexible display 220 is changed from the first state to the second state, the processor 210 may display the first screen in the first display area 221, and the second screen in the second display area 222 without a delay (e.g., a delay for changing resolution).

According to an embodiment, the processor 210 may identify information on a use history of an electronic device 200 stored in memory 230. The processor 210 may, based on the information on the use history of the electronic device 200, change the state of the flexible display 220 or activate (or deactivate) the second electrical path without a user input for changing the state of the flexible display 220 in order to reduce (or remove) the delay.

For example, the processor 210 may identify information representing that a user configures the state of the flexible display 220 to the second state in a state in which power is connected to the electronic device 200. As an example, the processor 210 may, based on the power being connected to the electronic device 200, configure the state of the flexible display 220 to the second state, and display the second screen within the second display area 222 by activating the second electrical path. As an example, the processor 210 may, based on the power being connected to the electronic device 200, previously compose the second screen to be provided through the second electrical path.

For example, the processor 210 may identify the information representing that the user configures the state of the flexible display 220 to the second state in a state in which the external electronic device 491 is connected to the electronic device 200. As an example, the processor 210 may, based on the external electronic device 491 being connected to the electronic device 200, configure the state of the flexible display 220 to the second state and display a fourth screen within the first display area 221 and the second display area 222, and display a third screen in the external electronic device 491, by activating a third electrical path. As an example, the processor 210 may, based on the external electronic device 491 being connected to the electronic device 200, previously compose the second screen to be provided to the external electronic device 491 through the third electrical path.

For example, when using the electronic device 200, the processor 210 may identify the information representing that the user configures the state of the flexible display 220 to the second state. As an example, the processor 210 may display the second screen within the second display area 222, by configuring the state of the flexible display 220 to the second state and activating the second electrical path, based on the user starting to use the electronic device 200. As an example, the processor 210 may, based on the user starting to use the electronic device 200, previously compose the second screen to be provided through the second electrical path.

For example, in case that a first application is executed in the electronic device 200, the processor 210 may identify the information representing that the state of the flexible display 220 is configured to the second state. As an example, the processor 210 may, based on the execution of the first application, display the second screen within the second display area 222, by configuring the state of the flexible display 220 to the second state and activating the second electrical path. As an example, the processor 210 may, based on the execution of the first application, previously compose the second screen to be provided through the second electrical path.

According to an embodiment, the processor 210 may, based on termination of a use of the electronic device 200, change the state of the flexible display 220 from the second state to the first state. The processor 210 may configure the state of the flexible display 220 to the first state, based on identifying a user input for turning off the power of the electronic device 200 from the user.

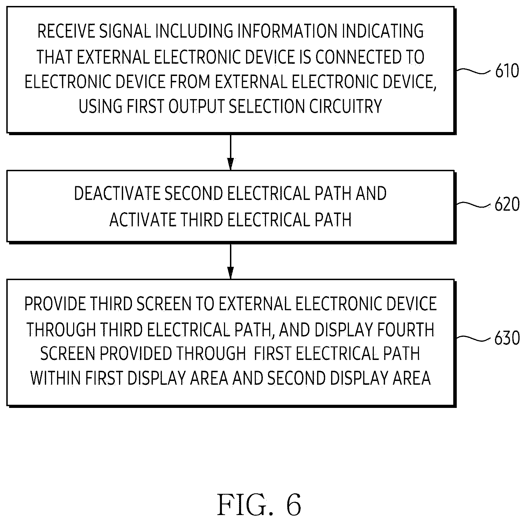

FIG. 6 illustrates a flowchart of an operation of an electronic device according to an embodiment.

Referring to FIG. 6, in operation 610, the processor 210 may receive a signal including information indicating that an external electronic device 491 is connected to an electronic device 200 from the external electronic device 491, using first output selection circuitry 241. For example, the processor 210 may identify that the external electronic device 491 is connected to the electronic device 200. The external electronic device 491 may, based on the external electronic device 491 being connected to the electronic device 200, transmit the signal including the information indicating that the external electronic device 491 is connected to the electronic device 200 to the electronic device 200. The processor 210 may receive the signal including the information indicating that the external electronic device 491 is connected to the electronic device 200 from the external electronic device 491, by using the first output selection circuitry 241. The processor 210 may, based on the received signal, identify that the external electronic device 491 is connected to the electronic device 200. For example, the signal including the information indicating that the external electronic device 491 is connected to the electronic device 200 may be referred to as a hot plug detection (HPD) signal.

In operation 620, the processor 210 may deactivate a second electrical path and may activate a third electrical path. For example, the processor 210 may deactivate the second electrical path and activate the third electrical path, using the first output selection circuitry 241, based on the received signal. For example, the processor 210 may maintain an activated first electrical path based on the received signal.

For example, the processor 210 may, based on identifying that the external electronic device 491 is connected, cease an operation of providing a first screen through the first electrical path and an operation of providing a second screen through the second electrical path. For example, the processor 210 may cease the operation of providing the first screen in a state in which the activated first electrical path is maintained. By deactivating the second electrical path, the processor 210 may cease the operation of providing the second screen through the second electrical path.

In operation 630, the processor 210 may provide a third screen to the external electronic device 491 through the third electrical path, and display a fourth screen provided through the first electrical path within the first display area 221 and the second display area 222. For example, based on the second electrical path being deactivated and the third electrical path being activated, the processor 210 may provide the third screen to the external electronic device 491 through the third electrical path and display the fourth screen provided through the first electrical path within the first display area 221 and the second display area 222.

According to an embodiment, after ceasing the operation of providing the first screen in the state in which the activated first electrical path is maintained, the processor 210 may change a screen provided through the first electrical path from the first screen to the fourth screen. The first screen may be composed, based on the first display area 221. The fourth screen may be composed based on the first display area 221 and the second display area 222. Resolution of the first screen may be distinct from resolution of the fourth screen.

The processor 210 may identify, based on a size of the first display area 221 and the second display area 222, resolution of a screen to be displayed through the first display area 221 and the second display area 222. The processor 210 may compose, based on the identified resolution, the fourth screen. The processor 210 may provide, through the first electrical path, the fourth screen to the flexible display 220. The processor 210 may display the fourth screen provided through the first electrical path within the first display area 221 and the second display area 222.

For example, after ceasing the operation of providing the second screen in a state in which the second electrical path is deactivated, and the third electrical path is activated, the processor 210 may provide the third screen to the external electronic device 491 through the third electrical path. The external electronic device 491 may display the third screen, by using a display of the external electronic device 491.

The processor 210 may identify, based on a size of a display area of the display of the external electronic device 491, resolution of a screen to be displayed through the display area of the display of the external electronic device 491. The processor 210 may compose, based on the identified resolution, the third screen. The processor 210 may provide, through the third electrical path, the third screen to the external electronic device 491. The processor 210 may display the third screen provided through the third electrical path, by using the display of the external electronic device 491.

According to an embodiment, the processor 210 may compose, based on the external electronic device 491 being connected to the electronic device 200, the third screen to be displayed through the external electronic device 491. The processor 210, in response to the external electronic device 491 being connected to the electronic device 200, compose the third screen. The processor 210 may previously compose the third screen in response to receiving the signal including the information indicating that the external electronic device 491 is connected to the electronic device 200 from the external electronic device 491. For example, the processor 210 may store the information on the external electronic device 491 in memory 230, based on a use history of the electronic device 200. The information on the external electronic device 491 may include information on the resolution of the screen displayed in the display area of the display of the external electronic device 491. The processor 210 may previously compose, based on the information on the external electronic device 491, the third screen. By composing the third screen before the third electrical path is activated, the processor 210 may reduce a delay for displaying the third screen by using the external electronic device 491.

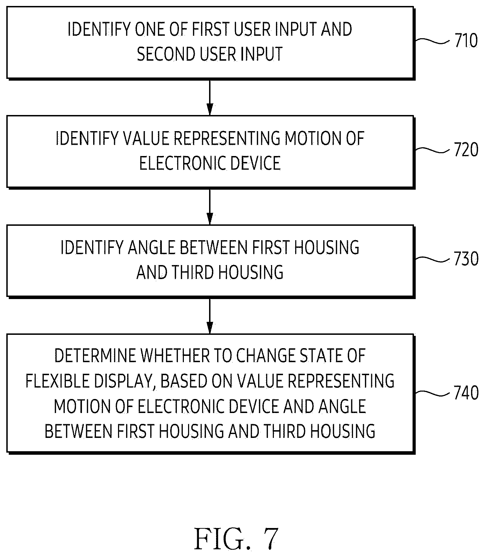

FIG. 7 illustrates a flowchart of an operation of an electronic device according to an embodiment.

Referring to FIG. 7, in operation 710, a processor 210 may identify one of a first user input and a second user input. The processor 210 may identify one of the first user input and the second user input for changing a state of a flexible display 220. For example, the processor 210 may identify the first user input for changing the state of the flexible display 220 from a first state to a second state. For example, the processor 210 may identify the second user input for changing the state of the flexible display 220 from the second state to the first state.

According to an embodiment, the processor 210 may identify whether an electronic device 200 is in a stable state in order to prevent damage to the flexible display 220. The processor 210 may identify operation 720 and operation 730 to determine whether the electronic device 200 is in the stable state. The operation 720 and the operation 730 illustrated as being performed sequentially in FIG. 7, but are not limited thereto. The operation 720 and the operation 730 may be performed simultaneously, or the operation 730 may be performed prior to the operation 720. For example, the processor 210 may perform the operation 710 to the operation 730, based on identifying that a protection mode for the electronic device 200 is being executed. Based on identifying that the protection mode for the electronic device 200 is not being executed, the processor 210 may change the state of the flexible display 220 without performing the operation 720 to the operation 740.

In the operation 720, the processor 210 may identify a value representing a motion of the electronic device 200. For example, the processor 210 may identify the value representing the motion of the electronic device 200 by using an acceleration sensor 251 and/or a gyroscope sensor 252. For example, the processor 210 may identify whether an orientation of the electronic device 200 is in a horizontal state by using the acceleration sensor 251 and/or the gyroscope sensor 252.

In the operation 730, the processor 210 may identify an angle between a first housing 201 and a third housing 203. For example, the processor 210 may identify whether the electronic device 200 is in the stable state by identifying the angle between the first housing 201 and the third housing 203. For example, based on the angle between the first housing 201 and the third housing 203, the processor 210 may identify whether a surface of the first housing 201 and a surface of the third housing 203 face each other. Based on identifying that the surface of the first housing 201 and the surface of the third housing 203 face each other, the processor 210 may identify that the electronic device 200 is not in use.

In the operation 740, the processor 210 may determine whether to change the state of the flexible display 220, based on the value representing the motion of the electronic device 200 and the angle between the first housing 201 and the third housing 203.

For example, the processor 210 may change, based on identifying that the value representing the motion of the electronic device 200 is less than or equal to a reference value and the angle between the first housing 201 and the third housing 203 is within a reference range (e.g., a range of 90 degrees or more and 120 degrees or less), the state of the flexible display 220. Based on identifying that the value for the motion of the electronic device 200 is less than or equal to the reference value and the angle between the first housing 201 and the third housing 203 is within the reference range, the processor 210 may identify that the electronic device 200 is in the stable state. As an example, based on identifying that the value for the motion of the electronic device 200 is less than or equal to the reference value, the processor 210 may identify that the electronic device 200 is in a state of not moving. Based on identifying that the value for the motion of the electronic device 200 is less than or equal to the reference value, the processor 210 may identify that the electronic device 200 is in a fixed state. As an example, based on identifying that the angle between the first housing 201 and the third housing 203 is within the reference range, the processor 210 may identify that the electronic device 200 is in use.

For example, the processor 210 may not, based on identifying that the value representing the motion of the electronic device 200 is greater than the reference value or the angle between the first housing 201 and the third housing 203 is out of the reference range, change the state of the flexible display. For example, based on identifying that the value representing the motion of the electronic device 200 is greater than the reference value or the angle between the first housing 201 and the third housing 203 is out of the reference range, the processor 210 may display, within a first display area 221, a screen representing information for guiding to change the angle between the first housing 201 and the third housing 203 within the reference range and maintain the electronic device in a fixed state.

According to an embodiment, the processor 210 may identify, based on the first user input, the value representing the motion of the electronic device 200, and the angle between the first housing 201 and the third housing 203. For example, the processor 210 may change, based on identifying that the value representing the motion is less than or equal to the reference value and the angle between the first housing 201 and the third housing 203 is within the reference range, the state of the flexible display 220 from the first state to the second state. For example, the processor 210 may maintain, based on identifying that the value representing the motion is greater than the reference value or the angle between the first housing 201 and the third housing 203 is out of the reference range, maintain the state of the flexible display 220 as the first state.

According to an embodiment, the processor 210 may identify, based on the second user input, the value representing the motion of the electronic device 200, and the angle between the first housing 201 and the third housing 203. For example, the processor 210 may change, based on identifying that the value representing the motion is less than or equal to the reference value and the angle between the first housing 201 and the third housing 203 is within the reference range, the state of the flexible display 220 from the second state to the first state. For example, the processor 210 may maintain, based on identifying that the value representing the motion is greater than the reference value or the angle between the first housing 201 and the third housing 203 is out of the reference range, maintain the state of the flexible display 220 as the second state.

According to an embodiment, the processor 210 may also identify an angle between the flexible display 220 and the ground, by using the acceleration sensor 251 and/or the gyroscope sensor 252. The processor 210 may identify that the electronic device 200 is in the stable state, based on identifying that the angle between the flexible display 220 and the ground is within a reference range. For example, the processor 210 may identify, based on the first user input, whether the angle between the flexible display 220 and the ground is within the reference range. The processor 210 may change, based on identifying that the angle between the flexible display 220 and the ground is within the reference range, the state of the flexible display 220 from the first state to the second state. For example, the processor 210 may identify, based on the second user input, whether the angle between the flexible display 220 and the ground is within the reference range. The processor 210 may change, based on identifying that the angle between the flexible display 220 and the ground is within the reference range, the state of the flexible display 220 from the second state to the first state.

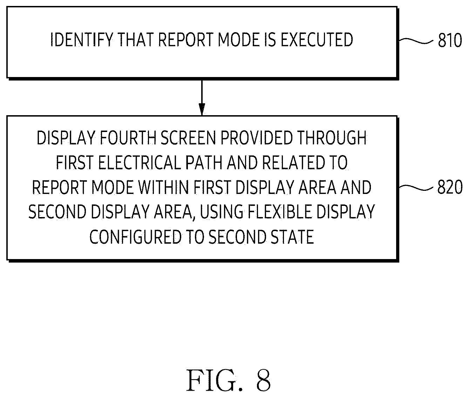

FIG. 8 illustrates a flowchart of an operation of an electronic device according to an embodiment.

Referring to FIG. 8, in operation 810, a processor 210 may identify that a report mode is executed. For example, the report mode may mean a mode in which a user of an electronic device 200 may view a screen (e.g., a screen that is working in a document work application) in which the user is working in the same as an actual size.

In operation 820, the processor 210 may display a fourth screen provided through a first electrical path and related to the report mode within a first display area 221 and a second display area 222, by using a flexible display 220 configured to a second state. For example, the processor 210 may display the fourth screen provided through the first electrical path and related to the report mode within the first display area 221 and the second display area 222, using the flexible display 220 configured to the second state, based on the report mode being executed.

According to an embodiment, the processor 210 may configure, based on the report mode being executed, the state of the flexible display 220 to the second state. For example, the processor 210 may change, the report mode being executed, the state of the flexible display 220 from a first state to the second state. After the state of the flexible display 220 is changed from the first state to the second state, the processor 210 may display the fourth screen related to the report mode within the first display area 221 and the second display area 222.

For example, the fourth screen may include an area of a predefined size. For example, the predefined size may correspond to a size of paper (e.g., A4 paper) used for document work. The processor 210 may display the fourth screen for representing the area of the predefined size so that the user of the electronic device 200 may view the screen (e.g., the screen that is working in the document working application) in which the user is working in the same as the actual size.

According to an embodiment, a processor 1110 may identify that a predefined application is executed. For example, the predefined application may include an application for the document work and an application for presentation. For example, the predefined application may include an application for performing the document work in an area representing the paper (e.g., A4 paper) of the predefined size. The processor 1110 may display the fourth screen as overlapping on a fifth screen related to the predefined application. The fifth screen may be displayed below the fourth screen.

For example, after displaying the fourth screen as overlapping on the fifth screen, the processor 210 may display the size of the paper displayed in the predefined application according to the area of the predefined size. For example, the processor 210 may display the size of the paper displayed in the predefined application according to the area of the predefined size, by adjusting magnification for the paper displayed in the predefined application. As an example, the processor 210 may display the size of the paper displayed in the predefined application according to the area of the predefined size, by changing a DPI, a toolbar area for the predefined application, and a horizontal/vertical mode.

According to an embodiment, the processor 210 may display a visual object for changing the area of the predefined size represented in the fourth screen by the user on the fourth screen.

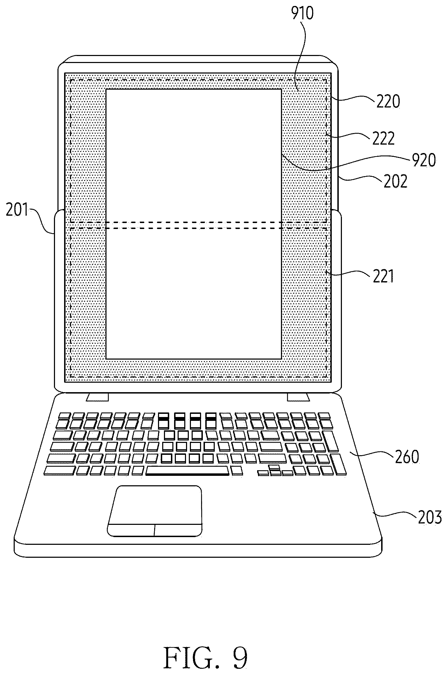

FIG. 9 illustrates an example of an operation of an electronic device according to an embodiment.

Referring to FIG. 9, a processor 210 may identify that a report mode is executed. For example, based on the report mode being executed, the processor 210 may display a fourth screen provided through a first electrical path and related to the report mode within a first display area 221 and a second display area 222, by using a flexible display 220 configured to a second state. According to an embodiment, the processor 210 may change, based on the report mode being executed, a state of the flexible display 220 from a first state to the second state.

According to an embodiment, the fourth screen 910 may include an area 920 corresponding to a predefined size. For example, the predefined size may correspond to a size of paper for document work. For example, the predefined size may correspond to the size of the A4 paper. The area 920 may correspond to the A4 paper.

According to an embodiment, the fourth screen 910 may be displayed as overlapping on a fifth screen (not illustrated) related to a predefined application. For example, the processor 1110 may display the size of the paper displayed in the fifth screen (not illustrated) related to the predefined application according to the area of the predefined size.

The above-described embodiment is illustrated as being performed in the electronic device 200 illustrated in FIGS. 2B or 4B, but is not limited thereto. The above-described embodiment may also be performed in the electronic device 200 illustrated in FIGS. 2A or 4A, and the electronic device 200 illustrated in FIGS. 2C or 4C.

According to an embodiment, an electronic device (e.g., the electronic device 200) may comprise a first housing (e.g., the first housing 201), a second housing (e.g., the second housing 202) slidably coupled to the first housing, a flexible display (e.g., the flexible display 220), comprising a first display area (e.g., the first display area 221) and a second display area (e.g., the second display area 222) extended from the first display area, providing a first state in which the second display area is rolled into the first housing by the second housing sliding relative to the first housing and a second state in which the second display area is exposed outside the first housing by the second housing sliding relative to the first housing, and a processor (e.g., the processor 210) connected to the flexible display through each of a first electrical path and a second electrical path. The processor may be configured to display, based on the flexible display in the first state, a first screen provided through the first electrical path within the first display area. The processor may be configured to display, based on the flexible display in the second state, the first screen provided through the first electrical path within the first display area and a second screen provided through the second electrical path within the second display area.

According to an embodiment, the processor may be configured to identify that a state of the flexible display is changed from the first state to the second state. The processor may be configured to activate, based on identifying that the state of the flexible display is changed from the first state to the second state, the second electrical path.

According to an embodiment, the processor may be configured to identify that a state of the flexible display is changed from the second state to the first state. The processor may be configured to deactivate, based on identifying that the state of the flexible display is changed from the second state to the first state, the second electrical path.

According to an embodiment, the electronic device may comprise first output selection circuitry (e.g., the first output selection circuitry 241). The first output selection circuitry may be used for activating at least one of the second electronic path for connecting the processor and the flexible display and a third electronic path for connecting the processor and an external electronic device (e.g., the external electronic device 491).

According to an embodiment, the processor may be configured to, in response to identifying that the external electronic device is connected, compose a third screen to be displayed through the external electronic device. The processor may be configured to provide, based on activating the third electrical path using the first output selection circuitry the third screen to the external electronic device through the third electrical path.

According to an embodiment, the processor may be configured to identify, based on receiving, using the first output selection circuitry, a signal including information indicating that the external electronic device is connected to the electronic device from the external electronic device, that the external electronic device is connected. The processor may be configured to, based on the signal, deactivate the second electrical path and activate the third electrical path, using the first output selection circuitry.

According to an embodiment, the processor may be configured to, based on identifying that the external electronic device is connected, cease an operation of providing, through the first electrical path, the first screen and an operation of providing, through the second electrical path, the second screen. The processor may be configured to, after the operations are ceased, display a fourth screen provided through the first electrical path within the first display area and the second display area.

According to an embodiment, the processor may be configured to identify, based on a size of the first display area and the second display area, resolution of a screen to be displayed through the first display area and the second display area. The processor may be configured to compose, based on the identified resolution, the fourth screen. The processor may be configured to provide, through the first electrical path, the fourth screen to the flexible display.

According to an embodiment, the electronic device may comprise a third housing (e.g., the third housing 203), rotatably coupled to the first housing, comprising at least one input device (e.g., the at least one input device 260) for receiving a user input, and a fourth housing (e.g., the fourth housing 204) slidably coupled to the first housing in a direction opposite to a direction in which the second housing slides. The flexible display may comprise a third display area rolled into the first housing or exposed outside the first housing, based on the fourth housing sliding relative to the first housing. The processor may be connected to the flexible display through a fourth electrical path used for providing a fourth screen within the third display area.

According to an embodiment, the electronic device may comprise second output selection circuitry (e.g., the second output selection circuitry 242) distinct from the first output selection circuitry. The second output selection circuitry may be used for activating one of the fourth electrical path for connecting the processor and the flexible display and a fifth electrical path for connecting the processor and another external electronic device.

According to an embodiment, the electronic device may comprise a third housing, rotatably coupled to the first housing, comprising at least one input device for receiving a user input, an acceleration sensor (e.g., the acceleration sensor 251), and a gyroscope sensor (e.g., the gyroscope sensor 252). The processor may be configured to identify a first user input for changing a state of the flexible display from the first state to the second state. The processor may be configured to identify, based on the first user input, a value representing a motion of the electronic device using the acceleration sensor and the gyroscope sensor. The processor may be configured to identify, based on the first user input, an angle between the first housing and the third housing. The processor may be configured to change, based on identifying that the value representing the motion of the electronic device is less than or equal to a reference value and the angle between the first housing and the third housing is within a reference range, the state of the flexible display from the first state to the second state.

According to an embodiment, the processor may be configured to, based on identifying that the value representing the motion of the electronic device is greater than the reference value and the angle between the first housing and the third housing is out of the reference range, maintain the state of the flexible display as the first state.

According to an embodiment, the processor may be configured to display, within the first display area, a screen representing information for guiding to change the angle between the first housing and the third housing within the reference range and maintain the electronic device in a fixed state.

According to an embodiment, the processor may be configured to identify a second user input for changing the state of the flexible display from the second state to the first state. The processor may be configured to, based on the second user input, identify, using the acceleration sensor and the gyroscope sensor, the value representing the motion of the electronic device. The processor may be configured to, based on the second user input, identify the angle between the first housing and the third housing. The processor may be configured to, based on identifying that the value representing the motion of the electronic device is less than or equal to the reference value and the angle between the first housing and the third housing is within the reference range, change the state of the flexible display from the second state to the first state.

According to an embodiment, the processor may be configured to identify that a report mode is executed. The processor may be configured to display a fourth screen provided through the first electrical path and related to the report mode within the first display area and the second display area, using the flexible display configured to the second state, based on execution of the report mode.

According to an embodiment, a method of an electronic device (e.g., the electronic device 200) may comprise identifying a state of a flexible display (e.g., the flexible display 220) comprising a first display area (e.g., the first display area 221) and a second display area (e.g., the second display area 222) extended from the first display area, as one of a first state in which the second display area is rolled into a first housing (e.g., the first housing 201) of the electronic device by a second housing (e.g., the second housing 202) of the electronic device, sliding relative to the first housing, and a second state in which the second display area is exposed outside the first housing by the second housing sliding relative to the first housing displaying. The method may comprise displaying, based on the flexible display in the first state, a first screen provided through a first electrical path within the first display area. The method may comprise displaying, based on the flexible display in the second state, the first screen provided through the first electrical path within the first display area and a second screen provided through a second electrical path within the second display area.

According to an embodiment, the method may comprise identifying that a state of the flexible display is changed from the first state to the second state. The method may comprise activating, based on identifying that the state of the flexible display is changed from the first state to the second state, the second electrical path.

According to an embodiment, the method may comprise identifying that a state of the flexible display is changed from the second state to the first state. The method may comprise deactivating, based on identifying that the state of the flexible display is changed from the second state to the first state, the second electrical path.

According to an embodiment, the method may comprise identifying, based on receiving, using the first output selection circuitry (e.g., the first output selection circuitry 241) of the electronic device, a signal including information indicating that the external electronic device is connected to the electronic device from an external electronic device (e.g., the external electronic device 491), that the external electronic device is connected. The method may comprise deactivating the second electrical path and activating a third electrical path, based on the signal, using the first output selection circuitry.

According to an embodiment, the method may comprise, based on identifying that the external electronic device is connected, ceasing an operation of providing, through the first electrical path, the first screen and an operation of providing, through the second electrical path, the second screen. The method may comprise, after the operations are ceased, displaying a fourth screen provided through the first electrical path within the first display area and the second display area.

According to an embodiment, the processor may display, based on the second display area of the flexible display being exposed to an outside, a screen on the second display area. The processor may provide a larger screen by expanding the flexible display.

According to an embodiment, the processor may not change resolution of the screen outputted from the processor by displaying the first screen in the first display area and displaying the second screen in the second display area. Therefore, the processor may display the first display area and the second display area without a delay (e.g., screen blinking). Since the first screen is provided through the first electrical path and the second screen is provided through the second electrical path, the processor may provide an extended screen without changing an OS structure or a framework.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing;
a second housing slidably coupled to the first housing;
a flexible display, comprising a first display area and a second display area extended from the first display area, providing a first state in which the second display area is rolled into the first housing by the second housing sliding relative to the first housing and a second state in which the second display area is exposed outside the first housing by the second housing sliding relative to the first housing; and
a processor connected to the flexible display through each of a first electrical path and a second electrical path, wherein the processor is configured to:
display, based on the flexible display in the first state, a first screen provided through the first electrical path within the first display area, and
display, based on the flexible display in the second state, the first screen provided through the first electrical path within the first display area and a second screen provided through the second electrical path within the second display area.

2. The electronic device of claim 1, wherein the processor is further configured to:
identify that a state of the flexible display is changed from the first state to the second state, and
activate, based on identifying that the state of the flexible display is changed from the first state to the second state, the second electrical path.

3. The electronic device of claim 1, wherein the processor is further configured to:
identify that a state of the flexible display is changed from the second state to the first state, and
deactivate, based on identifying that the state of the flexible display is changed from the second state to the first state, the second electrical path.

4. The electronic device of claim 1, further comprising:
first output selection circuitry,
wherein the first output selection circuitry is used for activating at least one of the second electronic path for connecting the processor and the flexible display and a third electronic path for connecting the processor and an external electronic device.

5. The electronic device of claim 4, wherein the processor is further configured to:
in response to identifying that the external electronic device is connected, compose a third screen to be displayed through the external electronic device, and
provide, based on activating the third electrical path using the first output selection circuitry the third screen to the external electronic device through the third electrical path.

6. The electronic device of claim 4, wherein the processor is further configured to:
identify, based on receiving, using the first output selection circuitry, a signal including information indicating that the external electronic device is connected to the electronic device from the external electronic device, that the external electronic device is connected, and
based on the signal, deactivate the second electrical path and activate the third electrical path, using the first output selection circuitry.

7. The electronic device of claim 6, wherein the processor is further configured to:
based on identifying that the external electronic device is connected, cease an operation of providing, through the first electrical path, the first screen and an operation of providing, through the second electrical path, the second screen, and
after the operations are ceased, display a fourth screen provided through the first electrical path within the first display area and the second display area.

8. The electronic device of claim 7, wherein the processor is further configured to:
identify, based on a size of the first display area and the second display area, resolution of a screen to be displayed through the first display area and the second display area,
compose, based on the identified resolution, the fourth screen, and
provide, through the first electrical path, the fourth screen to the flexible display.

9. The electronic device of claim 4, further comprising:
a third housing, rotatably coupled to the first housing, comprising at least one input device for receiving a user input; and
a fourth housing slidably coupled to the first housing in a direction opposite to a direction in which the second housing slides,
wherein the flexible display further comprises a third display area rolled into the first housing or exposed outside the first housing, based on the fourth housing sliding relative to the first housing and
wherein the processor is connected to the flexible display through a fourth electrical path used for providing a fourth screen within the third display area.

10. The electronic device of claim 9, further comprising second output selection circuitry distinct from the first output selection circuitry,
wherein the second output selection circuitry is used for activating one of the fourth electrical path for connecting the processor and the flexible display and a fifth electrical path for connecting the processor and another external electronic device.

11. The electronic device of claim 1, further comprising:
a third housing, rotatably coupled to the first housing, comprising at least one input device for receiving a user input;
an acceleration sensor; and
a gyroscope sensor,
wherein the processor is further configured to:
identify a first user input for changing a state of the flexible display from the first state to the second state,
identify, based on the first user input, a value representing a motion of the electronic device using the acceleration sensor and the gyroscope sensor,
identify, based on the first user input, an angle between the first housing and the third housing, and
change, based on identifying that the value representing the motion of the electronic device is less than or equal to a reference value and the angle between the first housing and the third housing is within a reference range, the state of the flexible display from the first state to the second state.

12. The electronic device of claim 11, wherein the processor is further configured to:
based on identifying that the value representing the motion of the electronic device is greater than the reference value and the angle between the first housing and the third housing is out of the reference range, maintain the state of the flexible display as the first state.

13. The electronic device of claim 12, wherein the processor is further configured to:
display, within the first display area, a screen representing information for guiding to change the angle between the first housing and the third housing within the reference range and maintain the electronic device in a fixed state.

14. The electronic device of claim 11, wherein the processor is further configured to:
identify a second user input for changing the state of the flexible display from the second state to the first state,
based on the second user input, identify, using the acceleration sensor and the gyroscope sensor, the value representing the motion of the electronic device,
based on the second user input, identify the angle between the first housing and the third housing, and
based on identifying that the value representing the motion of the electronic device is less than or equal to the reference value and the angle between the first housing and the third housing is within the reference range, change the state of the flexible display from the second state to the first state.

15. A method of an electronic device, comprising:
identifying a state of a flexible display comprising a first display area and a second display area extended from the first display area, as one of a first state in which the second display area is rolled into a first housing of the electronic device by a second housing of the electronic device, sliding relative to the first housing and a second state in which the second display area is exposed outside the first housing by the second housing sliding relative to the first housing
displaying, based on the flexible display in the first state, a first screen provided through a first electrical path within the first display area, and
displaying, based on the flexible display in the second state, the first screen provided through the first electrical path within the first display area and a second screen provided through a second electrical path within the second display area.
